# NEUE EUROPÄISCHE PATENTSCHRIFT

(11) **EP 1 268 110 B2**
(45) Veröffentlichungstag und Bekanntmachung des Hinweises auf die Entscheidung über den Einspruch: **08.06.2011**
(45) Hinweis auf die Patenterteilung: 28.06.2006
(21) Anmeldenummer: 01921005.3
(22) Anmeldetag: 03.04.2001
(51) Int. Cl.: B23K 9/127, B23K 9/12

(54) **VERFAHREN ZUM FORTLAUFENDEN REGELN BZW. NACHFÜHREN EINER POSITION EINES SCHWEISSBRENNERS BZW. EINES SCHWEISSKOPFES**
METHOD FOR CONTINUOUSLY REGULATING OR TRACKING A POSITION OF A WELDING TORCH OR A WELDING HEAD
PROCEDE DE REGULATION ET DE POURSUITE EN CONTINU D'UNE POSITION D'UN CHALUMEAU DE SOUDAGE OU D'UNE TETE DE SOUDAGE

(30) Priorität: 05.04.2000 AT 5802000
(43) Veröffentlichungstag der Anmeldung: 02.01.2003
(73) Patentinhaber: Fronius International GmbH, 4643 Pettenbach (AT)
(72) Erfinder: ARTELSMAIR, Josef, A-4552 Wartberg/Krems (AT); BRUNNER, Michael, A-8055 Seiersberg (AT); ETZENBERGER, Rudolf, A-4644 Scharnstein (AT)
(74) Vertreter: Ofner, Clemens
(86) Internationale Anmeldenummer: PCT/AT2001/000096
(87) Internationale Veröffentlichungsnummer: WO 2001/076799

(56) Entgegenhaltungen:
- EP-A- 0 428 755
- US-A- 4 525 619
- US-A- 4 785 155
- US-A- 4 906 814
- US-A- 5 130 514

## Beschreibung

Die Erfindung betrifft ein Verfahren zum fortlaufenden Regeln bzw. Nachführen einer Position eines Schweißbrenners bzw. eines Schweißkopfes zu einer herzustellenden Schweißnaht an einem Werkstück, bei dem der von einem Werkstück bzw. der Schweißnaht beabstandete Schweißbrenner eine seine lineare Schweißbewegung überlagernde Pendelbewegung ausführt, während die sich zeitlich ändernden Zustandsgrößen, insbesondere ein ohmscher Widerstand oder ein Strom und/oder eine Spannung, erfaßt werden, wobei für die Regelung bzw. Nachführung der Position des Schweißbrenners aus den erfaßten Istwerten die seitliche Abweichung des Schweißbrenners in bezug auf die Schweißnaht, insbesondere auf die Schweißnahtmitte, und/oder die Höhe des Schweißbrenners über dem Werkstück bzw, der Schweißnaht abgeleitet werden und ein Verfahren zum Generieren eines Signals für die fortlaufenden Regeln bzw. das Nachführen einer Position eines Schweißbrenners bzw. eines Schweißkopfes. Dokument US 4,785,155, welches als nächstliegender Stand der Technik anzusehen ist, zeigt ein derartiges Verfahren.

Aus der DE 43 17 178 A ist ein Verfahren zum fortlaufenden Regeln der Position eines Schweißbrenners bzw. eines Schweißkopfes in bezug auf eine vom Schweißkopf herzustellende Schweißnaht bekannt, wobei der beabstandet über der Schweißnaht angeordnete Schweißkopf eine seine lineare Schweißbewegung überlagernde Pendelbewegung ausführt, während der der sich zeitlich ändernde ohmsche Widerstand des Lichtbogens oder eine dazu analoge Größe gemessen wird. Aus dem Signal wird ein je Maß für die Höhe des Schweißkopfes über der Schweißnaht und für die seitliche Abweichung des Schweißkopfes in bezug auf die Schweißnaht abgeleitet, welche in den Regelkreis eingegeben werden. Die Meßwerte bzw. Signale für die bezüglich der Schweißnaht rechten Pendelhalbwellen werden von den Meßwerten bzw. Signalen für die bezüglich der Schweißnaht linken Pendelhalbwellen voneinander getrennt. Die Gruppe der so gewonnenen Signale wird in den Regelkreis als Höhenistwert eingegeben und die andere Gruppe der so gewonnenen Signale als Seitenistwert.

Weiters ist aus der DE 38 44 124 A1 ein automatisches Kopierverfahren für einen Schweißbrenner in einem Bogenschweißroboter bekannt, bei dem bei einer Kehlnahtschweißung ein oszillierender Mittelpunkt des Bogenschweißroboters mit aufbrauchbarer Elektrode die Schweißung durchführt, während der Schweißbrenner breitseits, also in Form einer Pendelbewegung, einer Schweißfuge bewegt wird. Bei diesem Verfahren werden die integrierten Stromwerte der beiden schwingenden Enden mit einem integrierten Stromwert eines Schwingungsmittelpunktes verglichen, um dadurch eine Bewegung der Kehlnahtschweißung gegen eine obere Platte des Werkstückes hin zu verhindern und somit die Position des Schweißbrenners entsprechend der Abweichung zu korrigieren.

Die DE 26 45 788 A1 beschreibt ein Verfahren und eine Vorrichtung für eine mechanische Schweißkopfführung, bei dem der periodisch pendelnde Schweißbrenner oder Schweißkopf unabhängig von der Anzahl der vom Schweißbrenner abgeschmolzenen Drahtelektrode der gesamte Schweißstrom in den beiden Umkehrpunkten der Pendelbewegung gemessen wird und durch Vergleich miteinander der Schweißkopf auf bekannte Weise in der Schweißnahtmitte geführt wird.

Die US 5,780,808 A beschreibt ein Lichtbogensensorverfahren für einen automatischen Schweißprozeß mit einem Roboter, bei denen durch Erfassen des Lichtbogenstromes Signale für die Position des Schweißbrenners über dem Werkstück ermittelt werden. Dabei ist es nunmehr möglich, daß das Werkstück nicht mehr nur horizontal positioniert werden muß, sondern auch die Position des Schweißbrenners zur Schweißfuge bei winkeliger Position des Werkstückes möglich ist. Die Ermittlung der Position der Schweißfugenmitte erfolgt derartig, daß der Schweißbrenner in Beziehung zu der Schweißfugenmitte auf der Basis des Lichtbogenstromes geführt wird.

Aus der US 4,906,814 A ist wiederum ein Verfahren zum Regeln der Position eines Schweißbrenners zu einer Schweißfuge bekannt, bei dem durch Aufnahme des Lichtbogenstromes Signale abgeleitet werden, die für die Positionsbestimmung des Schweißbrenners herangezogen werden. Hierzu wird wiederum eine Pendelbewegung des Schweißbrenners ausgeführt, wobei die unterschiedlichen Zustände des Lichtbogens berücksichtigt werden.

Nachteilig ist bei den zuvor beschriebenen bekannten Verfahren, daß für die Erfassung bzw. für die Messung der Zustandsgrößen eine zusätzliche Meßvorrichtung benötigt wird, die mit den entsprechenden Elementen am Schweißbrenner zur Aufnahme der Zustandsgrößen des Schweißprozesses über Leitungen verbunden ist und die aufgenommenen Signale anschließend an die Robotersteuerung für einen Soll/Istvergleich weiterleitet.

Der Erfindung liegt die Aufgabe zugrunde, ein Verfahren zum fortlaufenden Regeln bzw. Nachführen einer Position eines Schweißbrenners bzw. eines Schweißkopfes zu einer herzustellenden Schweißnaht an einem Werkstück sowie ein Verfahren zur Generierung eines Signals zu schaffen, bei dem ohne zusätzliche externe Komponenten, wie beispielsweise einer Meßvorrichtung, das Auslangen gefunden werden kann, sowie die Qualität des Signals für die Positionsregelung zu verbessern.

Die Aufgabe der Erfindung wird durch ein Verfahren mit den Merkmalen des Patentanspruches 1 oder 2 gelöst.

Weitere vorteilhafte Maßnahmen sind in den Ansprüchen 3 bis 19 beschrieben. Die sich daraus ergebenden Vorteile sind aus der Beschreibung zu entnehmen.

Die Erfindung wird anhand von Ausführungsbeispielen näher erläutert.

Es zeigen:
- Fig. 1: eine schematische Darstellung einer Schweißmaschine bzw. eines Schweißgerätes;
- Fig. 2: eine schematische Darstellung für die Führung eines Schweißbrenners gegenüber einer Schweißfuge an einem Werkstück;
- Fig. 3: einen Signalverlauf für die Positionsbestimmung des Schweißbrenners in vereinfachter, schematischer Darstellung;
- Fig. 4: einen Schweißprozeß eines Schweißgerätes in vereinfachter, schematischer Darstellung;
- Fig. 5: einen weiteren Schweißprozeß des Schweißgerätes in vereinfachter, schematischer Darstellung;
- Fig. 6: einen Teilausschnitt einer Prozeßphase des Schweißprozesses gemäß den Fig. 4 oder 5 in vereinfachter, schematischer Darstellung.

Einführend wird festgehalten, daß gleiche Teile der einzelnen Ausführungsbeispiele mit gleichen Bezugszeichen versehen werden.

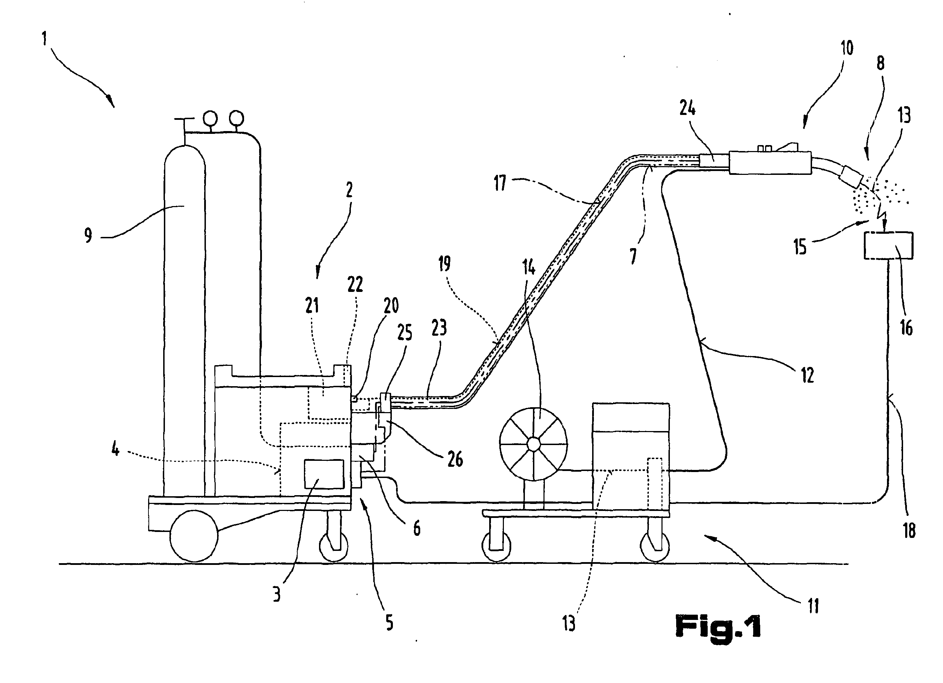

In Fig. 1 ist eine Schweißanlage bzw. ein Schweißgerät 1 für verschiedenste Schweißverfahren, wie z.B. MIG/MAG-Schweißen bzw. TIG-Schweißen oder Elektroden-Schweißverfahren, gezeigt. Selbstverständlich ist es möglich, daß die erfindungsgemäße Lösung bei einer Stromquelle bzw. einer Schweißstromquelle eingesetzt werden kann.

Das Schweißgerät 1 umfaßt eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Drahtführungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Schweißleitung 17 vom Leistungsteil 3 der Stromquelle 2 dem Schweißbrenner 10 bzw. dem Schweißdraht 13 zugeführt, wobei das zu verschweißende Werkstück 16 über eine weitere Schweißleitung 18 ebenfalls mit dem Schweißgerät 1, insbesondere mit der Stromquelle 2, verbunden ist und somit über dem Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet werden kann und somit eine Kühlung des Schweißbrenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

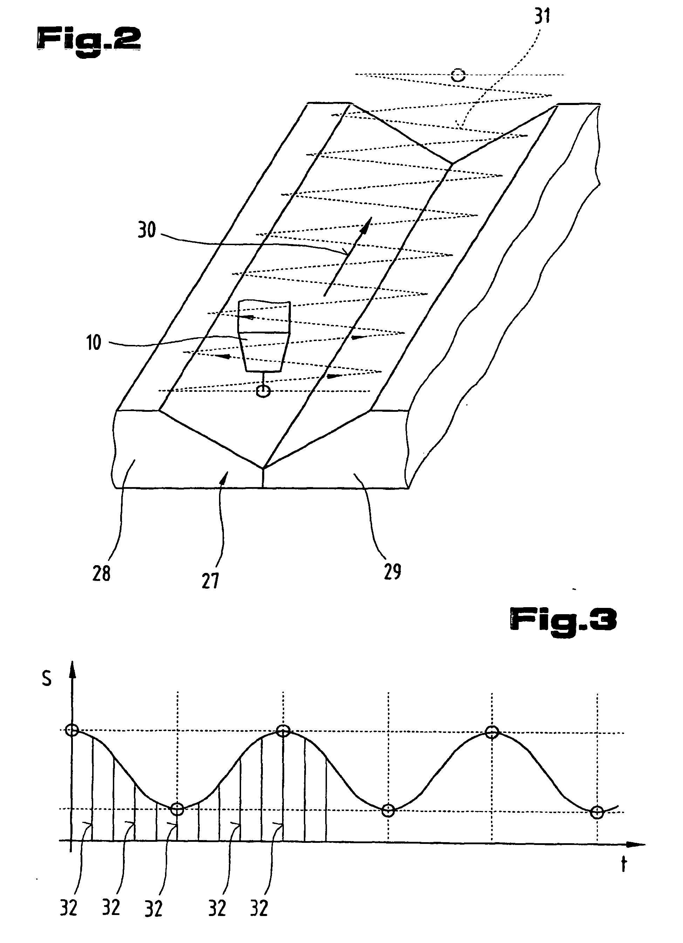

In den Fig. 2 und 3 ist ein Verfahrensablauf für eine Regelung bzw. Nachführung einer Position des Schweißbrenners 10 bzw. eines Schweißkopfes dargestellt, bei dem der Schweißbrenner 10 von einer Vorrichtung bzw. einer Anlage, insbesondere von einer Roboteranlage oder einem Schweißroboter, entlang einer Schweißfuge 27 bzw. einer Schweißnaht geführt wird.

Hierzu ist in Fig. 2 als Beispiel eine profilierte Schweißfuge 27 dargestellt, die durch zwei aneinander stoßende Werkstücke 28, 29 mit entsprechend profilierten Oberflächen ausgebildet ist, welche miteinander eine V-förmige Schweißfuge 27 bzw. Schweißnaht ausbilden. Für die Bildung einer Schweißraupe in der Schweißfuge 27 ist schematisch der Schweißbrenner 10 über den Werkstücken 28, 29 positioniert.

Der von den Werkstücken 28, 29 bzw. der Schweißnaht beabstandete Schweißbrenner 10 führt eine seine lineare Schweißbewegung, gemäß Pfeil 30, überlagernde Pendelbewegung aus, während die sich zeitlich ändernden Zustandsgrößen, insbesondere ein ohmscher Widerstand oder ein Strom und/oder eine Spannung, erfaßt werden, d.h., daß der Schweißstrom und/oder die Schweißspannung oder der daraus resultierende Widerstand zwischen dem Schweißbrenner 10 und dem Werkstück 28, 29 erfaßt werden. Die Pendelbewegung ist dabei in Fig.2 mit strichlierten Linien 31 eingetragen, so daß die von der Roboteranlage durchgeführte Bewegung des Schweißbrenners 10 ersichtlich ist. Diese Bewegung des Schweißbrenners 10 wird im Stand der Technik in der Roboteranlage programmiert, so daß von einer Robotersteuerung durch Abarbeiten des Programmes ein derartiger Bewegungsablauf geschaffen werden kann. Gleichzeitig wird, wie bereits zuvor erwähnt, zumindest eine Zustandsgröße des Schweißprozesses zu vorgegebenen Zeitpunkten erfaßt und für die Positionierung bzw. Regelung oder Nachführung des Schweißbrenners 10 von der Roboteranlage verarbeitet, d.h., daß beispielsweise der Stromfluß zwischen dem Schweißbrenner 10 oder einem Kontaktrohr und dem Werkstück 28, 29 während eines gestarteten Schweißprozesses gemessen wird, so daß von der Roboteranlage entsprechende Istwerte bzw. Signale für die Position des Schweißbrenners 10 in bezug zur Schweißfuge 27 bzw. zur Schweißnaht hergeleitet werden können.

Ein derartiger Signalverlauf ist dabei in Fig. 3 dargestellt, wobei hierzu die Maximumwerte die Schweißnahtmitte angeben und die Minimumwerte die maximale linke oder rechte Seitenabweichung darstellen. Dieser Signalverlauf wird dabei aus einem einzigen Signal 32 mit unterschiedlichen Werten bzw. Istwerten, wie schematisch über einen Teilbereich der Fig. 3 angedeutet, gebildet, wobei jedoch die einzelnen Istwerte des Signals 32 sofort nach dem Erfassen von der Roboteranlage für die Positionskontrolle bzw. Positionskorrektur verarbeitet werden. Damit jedoch ein derartiges Positionsregelverfahren durchgeführt werden kann, wird meist am Beginn eines Schweißprozesses zuerst ein Abgleichverfahren durchgeführt. Dadurch kann eine Nahtmitte mit entsprechenden Sollwerten ermittelt werden, so daß anschließend ein Vergleich der erfaßten Istwerte, die den Werten des Signals 32 entsprechen, während des Schweißprozesses mit den gespeicherten bzw. ermittelten Sollwerten möglich ist und somit während des Schweißprozesses eine Regelung der Position des Schweißbrenners 10 durchgeführt werden kann, d.h., daß die Roboteranlage für die Regelung bzw. Nachführung der Position des Schweißbrenners 10 aus den erfaßten Istwert bzw. Signalen die seitliche Abweichung des Schweißbrenners 10 in bezug auf die Schweißnaht, insbesondere auf die Schweißnahtmitte, und/oder die Höhe des Schweißbrenners 10 über dem Werkstück 28, 29 bzw. der Schweißnaht ableiten kann.

Derartige zuvor beschriebene Verfahrensabläufe sind bereits aus dem Stand der Technik, wie beispielsweise aus der DE 43 17 178 A1, der DE 38 44 124 A1, der DE 26 45 788 A1, der US 5,780,808 A oder der US 4,906,814 A, bekannt, so daß auf die Bildung der Signale 32 bzw. Istwerte für die Position nicht mehr näher eingegangen wird. Bei diesen Verfahrensabläufen erfolgt die Meßwerterfassung durch eine zusätzliche Meßvorrichtung, d.h., daß entsprechende Meßstellen bzw. Meßpunkte für die Aufnahme der Zustandsgrößen des Schweißprozesses meist im Bereich des Schweißbrenners 10 geschaffen werden, wobei die Meßpunkte über Leitungen mit einer Auswertevorrichtung in der Roboteranlage verbunden sind, so daß von dieser entsprechende Istwerte für die Robotersteuervorrichtung gebildet werden können.

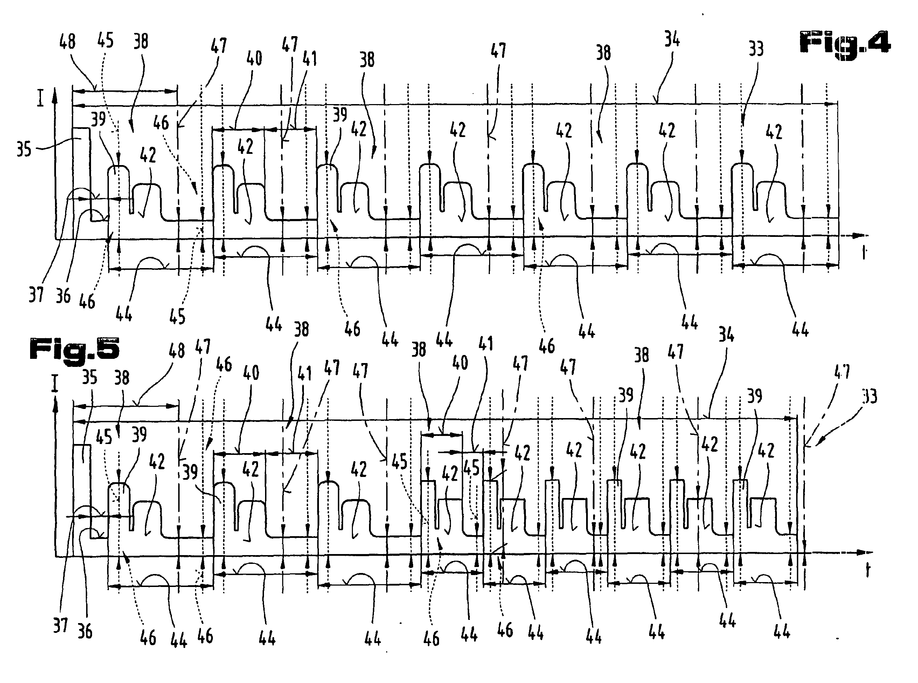

In den Fig. 4 bis 6 ist nunmehr das neuartige Verfahren für die Bestimmung der Position und die Bildung der Signale 32 bzw. der Istwerte, die die Position des Schweißbrenners 10 definieren, beschrieben. Hierzu ist ein Stromverlauf eines gesamten Schweißprozesses 33, beispielsweise eines Pulsschweißverfahrens, der im beschriebenen Ausführungsbeispiel über eine Gesamtzeitdauer 34 verläuft, in den Fig. 4 und 5 aufgetragen.

Bei diesem Schweißprozeß 33 ist beispielsweise am Beginn ein Startimpuls 35 für die Zündung des Lichtbogens 15 eingetragen, worauf nach der Zündung des Lichtbogens 15 ein Absenken der Stromhöhe auf einen Grundstrom 36 zur Aufrechterhaltung des Lichtbogens 15 durchgeführt wird. Anschließend wird der Grundstrom 36 über eine voreinstellbare Zeitdauer 37 konstant gehalten. Innerhalb dieser Zeitdauer 37 besteht nunmehr die Möglichkeit, daß von der Roboteranlage ein Abgleichverfahren durchgeführt werden kann, d.h., daß vor dem Beginn des eigentlichen Schweißprozesses 33 ein Nullpunktabgleich durchgeführt wird, wobei die aufgenommenen bzw. erfaßten Signale 32 bzw. Istwerte als Referenzwerte bzw. Sollwerte gespeichert werden. Selbstverständlich ist es möglich, daß das Abgleichverfahren auch während des tatsächlichen Schweißprozesses 33 durchgeführt werden kann.

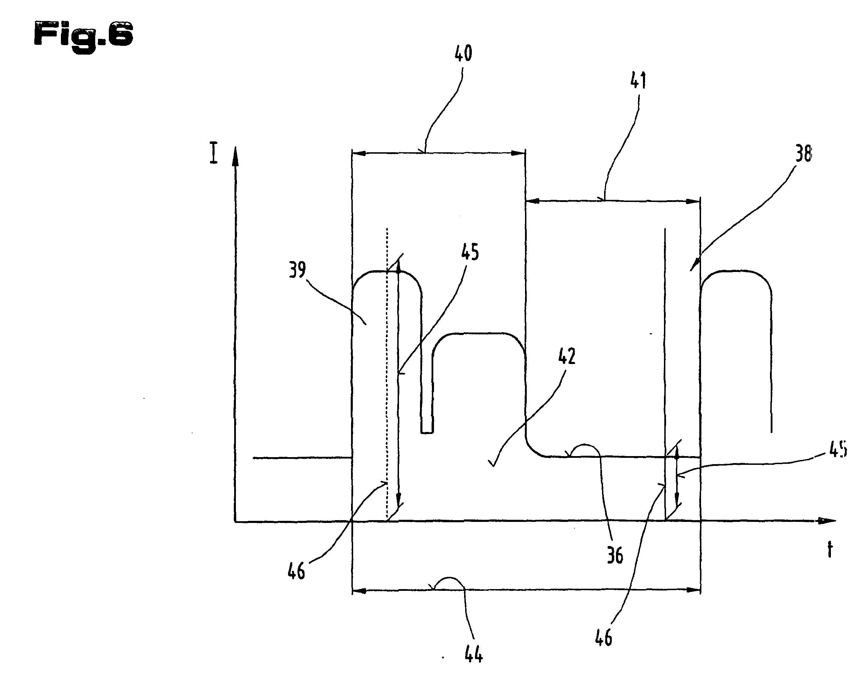

Nach Ablauf der Zeitdauer 37 wird von dem Schweißgerät 1 bzw. einer Steuervorrichtung 4 im Schweißgerät 1 (siehe Fig. 1) der eigentliche Schweißprozeß 33 gestartet, der sich aus mehreren periodisch wiederkehrenden Prozeßphasen 38 zusammensetzt, d.h., daß der Schweißprozeß 33 aus lauter einzelnen Abschnitten bzw. Prozeßphasen 38 gebildet wird. In dem dargestellten Ausführungsbeispiel wird dieser Schweißprozeß 33 durch ein Pulsschweißverfahren gebildet, d.h., daß bei jedem Impuls 39 ein Schweißtropfen von dem Schweißdraht 13 (siehe Fig. 1) gelöst wird. Das Pulsschweißverfahren setzt sich dabei aus einer Pulsphase 40 und einer Pausenphase 41 zu einer Pulsperiode 42 zusammen, wobei während eines Schweißprozesses 33 mehrere derartige Pulsperioden 42 aneinandergereiht werden. Dabei ist in Fig. 4 der Schweißprozeß 33 mit konstant bleibender Pulsperiode 42 dargestellt, wogegen in Fig. 5 zu einem Zeitpunkt 43 eine Änderung der Pulsperiode 42, also einer Periodendauer 44, erfolgt. Weiters ist zur besseren Darstellung in Fig. 6 eine Prozeßphass 38 des Schweißprozesses 33, also in diesem Ausführungsfall eine einzige Pulsperiode 42, dargestellt.

Bei dem erfindungsgemäßen Verfahren wird, wie insbesondere in Fig. 2 beschrieben, wiederum zum fortlaufenden Regeln bzw. Nachführen der Position des Schweißbrenners 10 bzw. eines Schweißkopfes zu einer herzustellenden Schweißnaht an dem Werkstück 28, 29 durchgeführt, bei dem der von dem Werkstück 28, 29 bzw. der Schweißnaht beabstandete Schweißbrenner 10 eine in seiner linearen Schweißbewegung, gemäß Pfeil 30, überlagernde Pendelbewegung ausführt, während die sich zeitlich ändernden Zustandsgrößen, insbesondere ein ohmscher Widerstand oder ein Strom und/oder eine Spannung, erfaßt werden.

Die Meßwerterfassung, insbesondere die Erfassung der Zustandsgrößen, für die Bildung eines Signals 32 bzw. der Istwerte wird zum Unterschied vom Stand der Technik nunmehr im Schweißgerät 1, insbesondere an den Ausgangsklemmen des Schweißgerätes 1, durchgeführt. Durch die Bildung der Meßwerte bzw. der Signale 32 vom Schweißgerät 1, insbesondere von der Steuervorrichtung 3 des Schweißgerätes 1, ist es möglich, daß die Überwachungssysteme bzw. die für die Regelung des Schweißprozesses 33 eingesetzten Meßorgane bzw. Baugruppen verwendet werden können und somit keine zusätzliche externe Meßvorrichtung mehr benötigt wird. Die vom Schweißgerät 1 ermittelten Daten bzw. Istwerte werden anschließend an die Robotersteuerung für die Positionsnachführung übersendet. Dabei ist es jedoch möglich, daß zwischen der Steuervorrichtung 3 des Schweißgerätes 1 und der Robotersteuerung ein bidirektionaler Datenaustausch durchgeführt werden kann, so daß entsprechende Steuerbefehle an oder von der Robotersteuerung bei der Bildung der Signale 32 bzw. der Istwerte berücksichtigt werden können.

Bei dem erfindungsgemäßen Positionsverfahren wird zwischen unterschiedlichen Daten für die Position des Schweißbrenners 10 unterschieden, nämlich einerseits zwischen Daten, die im Schweißgerät 1 verarbeitet werden und jenen Daten, die an den Roboter bzw. an die Robotersteuerung übergeben werden. Nachfolgend werden jene Daten bzw. Istwerte, die im Schweißgerät 1 ermittelt, berechnet oder verarbeitet werden, als Meßsignale 45 bezeichnet und jene Daten bzw. Istwerte, die vom Schweißgerät 1 ausgesendet werden, als Signale 32.

Da die Erfassung der Daten bzw. der Meßwerte von dem Schweißgerät 1 aus gesteuert wird, kann die Meßwerterfassung mit dem Schweißprozeß 33 gekoppelt werden, d.h., daß in Abhängigkeit der periodisch wiederkehrenden Prozeßphasen 38 eines gesamten Schweißprozesses 33 die Meßwerterfassung zumindest eines Meßsignals 45, insbesondere die Erfassung der Zustandsgröße, zu festgelegten Zeitpunkten 46 und/oder Zuständen der periodisch wiederkehrenden Prozeßphasen 38 des Schweißprozesses 33 durchgeführt wird. Die Bestimmung der Daten bzw. Istwerte für die Position des Schweißbrenners 10 durch die Meßwerte der Zustandsgrößen im Schweißgerät 1 ist insofern möglich, da diese Meßwerte Äquivalent zu den Meßwerten am Schweißbrenner 10 sind, d.h., daß eine Lichtbogenlänge bzw. ein Kontaktrohrabstand zwischen dem Schweißbrenner 10 und dem Werkstück 16, 28, 29 nicht direkt am Schweißbrenner 10 ermittelt werden muß, sondern diese direkt aus den Zustandsgrößen im Schweißgerät 1 hergeleitet werden können. Die Meßsignale 45 der erfaßten Zustandsgrößen im Schweißgerät 1 und/oder an den Ausgangsklemmen des Schweißgerätes 1 entsprechen also einer Länge des Lichtbogens 15 oder einem Kontaktrohrabstand zur Schweißnaht bzw. zur Schweißfuge 27, d.h., daß die prozeßzustandsabhängigen Istwerte bzw. Meßsignale 45 der erfaßten Zustandsgrößen im Schweißgerät 1 ein Lichtbogenlängenäquivalent und/oder ein Kontaktrohrlängenäquivalent zur Schweißnaht darstellen bzw. ein lichtbogenlängenäquivalentes und/oder ein kontaktrohrlängenäquivalentes Signal geschaffen wird.

Durch die Verwendung der im Schweißgerät 1 für den Schweißprozeß 33 zur Verfügung stehenden Daten wird weiters erreicht, daß keine zusätzlichen Meßvorrichtungen und somit keine Leitungen, wie dies aus dem Stand der Technik bekannt ist, erforderlich sind und somit Fehlerquellen vermieden werden können. Ein wesentlicher Vorteil liegt darin, daß durch die internen Daten des Schweißgerätes 1 diese direkt mit dem Schweißprozeß 33 gekoppelt werden können, wodurch Änderungen des Schweißprozesses 33 bei der Einstellung und/oder der Regelungen sowie Störungen bei der Meßwertermittlung berücksichtigt werden können, d.h., daß die Zeitpunkte oder die Zustände für die Meßwerterfassung der Meßsignale 45 bei veränderten Prozeßphasen des Schweißprozesses 38 an diese angepaßt werden.

Bei dem gezeigten Ausführungsbeispiel wird die Meßwerterfassung beim Pulsschweißen zu festgelegten Zeitpunkten 46 oder zu bestimmten Prozeßphasen 38 einer Pulsperiode 42, insbesondere einer Pulsphase 40 und/oder einer Pausenphase 41 und/oder anderen Prozeßzuständen, wie z.B. einer Kurzschlußdauer usw., oder der gesamten Periode oder einer Kombination daraus, durchgeführt. Dabei ist es möglich, daß in einer Prozeßphase 38 bzw. während einer Pulsperiode 42 mehrere Meßsignale 45 zu unterschiedlichen Zeitpunkten 46 und/oder Zuständen generiert werden können.

Um die Ermittlung der Meßwerte bzw. der Meßsignale 45 in bezug auf eine Prozeßphase 38 sichtbar zu machen, wurden in den Fig. 4 bis 6 die Erfassungszeitpunkte durch strichlierte Linien eingetragen. Dabei wird zu diesen Zeitpunkten 46 eine Erfassung der Zustandsgrößen durchgeführt, d.h., daß die gerade anliegenden Werte, insbesondere des Schweißstromes und/oder der Schweißspannung, erfaßt und als Meßsignal 45 bzw. Istwert gespeichert werden, die anschließend von einer Steuervorrichtung 3 im Schweißgerät 1 zu einem Signal 32 verarbeitet werden, d.h., daß das aus den Zustandsgrößen berechnete lichtbogenlängenäquivalente und/oder kontaktrohrlängenäquivalente Signal an eine externe Vorrichtung bzw. Anlage, insbesondere eine Roboteranlage, weitergeleitet wird.

Dabei können nunmehr unterschiedliche Auswertemethoden angewandt werden. Einerseits können die ermittelten Meßsignale 45 direkt als Signale 32 an die Robotersteuerung übersandt werden, oder es können mehrere Meßsignale 45 zu einem einzigen Signal 32 zusammengefaßt werden. Dabei werden jedoch bevorzugt nur jene Meßsignale 45 einer Prozeßphase 38, also einer Pulsperiode 42, zusammengefaßt.

Für das Zusammenfassen mehrerer Meßsignale 45 zu einem einzigen Signal 32 können von der Steuervorrichtung 3 des Schweißgerätes 1 unterschiedliche Methoden angewandt werden. Es ist dabei möglich, daß beispielsweise ein Mittelwert gebildet wird, oder daß prozentuelle Anteile der einzelnen Meßwerte 45 berücksichtigt werden, oder daß eine Summierung der einzelnen Meßwerte 45 stattfindet. Wesentlich ist hierbei, daß ein für die Robotersteuervorrichtung verständliches Signal 32, insbesondere ein lichtbogen- und/oder kontaktrohrlängenäquivalentes Signal, geschaffen wird.

Der wesentliche Vorteil beim Zusammenfassen mehrerer Meßsignale 45 zu einem Signal 32 liegt darin, daß damit die Genauigkeit sehr gesteigert werden kann und zusätzlich durch die Kopplung mit einer Prozeßphase 38 des Schweißprozesses 33 die Zustände des Schweißprozesses 33 mit berücksichtigt werden können.

Für die Zusammenfassung mehrerer Meßsignale 45 ist es auch möglich, daß in einer Programmdatenbank Meßsignalparameter definiert sind, welche die Anteile der einzelnen Meßsignale 45, insbesondere der einzelnen Meßsignale 45 zu den unterschiedlichen Zeitpunkten 46 im Schweißprozeß 33 bzw. in der Prozeßphase 38, für die Berechnung bzw. Bildung des Signals 32, insbesondere des lichtbogenlängenäquivalenten und/oder kontaktrohrlängenäquivalenten Signals, definieren. Dabei ist es auch möglich, daß durch die Programmdatenbank die Meßsignalparameter mit Schweißprozeßparametern der Prozeßphasen 38 bzw. eines Schweißprozeßreglers gekoppelt werden. Bevorzugt wird die Programmdatenbank durch eine Parameterstruktur einer Fuzzy-Logik gebildet.

Durch einen Einsatz einer Programmdatenbank bzw. der Vergabe von Meßsignalparametern wird erreicht, daß für die unterschiedlich ermittelten Meßsignale 45 bzw. Istwerte für die Berechnung des Signals 32 verschiedenste Parameter, wie beispielsweise prozentuelle Anteile, Prioritäten bzw. Wertigkeiten usw. vergeben werden können, so daß die Qualität des berechneten bzw. gebildeten Signals 32 wesentlich verbessert werden kann. Ein weiterer Vorteil liegt auch darin, daß in die Programmdatenbank, in der die Meßsignalparameter mit den Schweißparametern gekoppelt sind, eine Definition von unterschiedlichen Prozeßphasen 38 durchgeführt werden kann, so daß bei einer Auswahl und/oder einem Aufruf einer derartig hinterlegten Prozeßphase 38 immer bestimmte Meßsignale 45 für die Bildung des Signals 32 herangezogen werden können, d.h., daß bei unterschiedlichen Prozeßphasen 38 unterschiedliche Zeitpunkte 46 oder Zustände für die Erfassung der Zustandsgrößen definiert sein können oder sich die Wertigkeiten bzw. Anteile der einzelnen Istwerte bzw. Meßwerte 45 ändern können.

Dadurch ist es auch möglich, daß immer nur jene Meßsignale 45 für die Berechnung des Signals 32 herangezogen werden, bei denen eine sichere Erfassung der Zustandsgrößen möglich ist und somit störbehaftete bzw. störanfällige Bereiche einer Prozeßphase 38 ausgeblendet werden können.

Wie nunmehr aus den dargestellten Ausführungsbeispielen ersichtlich ist, werden innerhalb einer Pulsperiode 42 zwei Meßsignale 45 ermittelt. Selbstverständlich ist es möglich, daß auch mehrere Meßsignale 45 während einer Prozeßphase 38 gebildet werden können. Dabei wird das erste Meßsignal 45 in der Pulsphase 40 und das zweite Meßsignal 45 in der Grundstromphase 41 ermittelt. Aus diesen beiden Meßsignalen 45 wird anschließend von einer Steuervorrichtung 3 ein einziges Signal 32 generiert, welches an die Robotersteuerung übersandt wird. Die Erfassung der Meßsignale 45 wird dabei immer zu den selben Zeitpunkten 46 einer Pulsperiode 42 durchgeführt. Dabei ist es auch möglich, daß sich die Periodendauer 44 einer oder mehrerer Pulsperioden 42, wie dies in Fig. 5 ab den Zeitpunkt 43 dargestellt ist, ändern kann, wobei sich nunmehr die Zeitpunkte 46 für die Erfassung der Meßsignale 45 entsprechend ändern, d.h., sich die Zeitpunkte 46 proportional zu der Pulsperiode 42 bzw. zu der Periodendauer 44, also zu der Prozeßphase 38, ändern, wodurch wiederum zum selben Zustand des Prozesses die Erfassung durchgeführt wird.

Damit der Unterschied zum Stand der Technik eindeutig ersichtlich wird, wurden in den Fig. 4 und 5 Erfassungszeitpunkte 47 mit strichpunktierten Linien gemäß dem Stand der Technik eingetragen. Da beim Stand der Technik keine Koppelung mit dem Schweißprozeß 33 möglich ist, werden die Erfassungszeitpunkte 47 fix definiert, so daß nach dem Start des Schweißprozesses 33 jeweils nach Ablauf einer fix vorgegebenen Zeitdauer 48 eine Meßwerterfassung durchgeführt wird. Dabei ist in Fig. 4 ersichtlich, daß diese bei unveränderten Prozeßphasen 38 auch immer zu einem gewissen Zustand des Schweißprozesses 33 durchgeführt wird und somit die Werte der erfaßten Zustandsgrößen sich im Verhältnis zueinander nicht wesentlich ändern werden, wodurch eine entsprechende Positionsregelung von der Robotersteuerung über die Zustandsgrößen möglich ist. Dies ist jedoch in der Praxis kaum möglich, da Störeinflüsse, Materialveränderung, Versorgungsschwankungen usw. auf den Schweißprozeß 33 einwirken und somit immer eine Regelung bzw. Anpassung der einzelnen Prozeßphasen 38 des Schweißprozesses 33 von dem Schweißgerät 1 (siehe Fig. 1) vorgenommen wird.

Ändert sich jedoch zumindest eine Prozeßphase 38 des Schweißprozesses 33 in seiner Periodendauer 44, wie dies in Fig. 5 ab dem Zeitpunkt 43 der Fall ist, so werden die einzelnen Erfassungszeitpunkte 47 des Standes der Technik jedoch nicht geändert und es tritt nun der Fall ein, daß diese Erfassungszeitpunkte 47 mit den unterschiedlichsten Zuständen der Pulsperiode 42 bzw. der Prozeßphasen 38 zusammen fallen. Damit werden immer unterschiedliche Meßergebnisse erzielt, da beispielsweise einmal in der Pulsphase 40 und ein anderes mal in der Grundstromphase 41 die Meßwertermittlung durchgeführt wird und dabei die Werte der Zustandsgrößen jedesmal erhebliche Abweichungen voneinander aufweisen, so daß es unmöglich ist, die exakte Position für den Schweißbrenner 10 zu bestimmen und somit eine ständige Positionskorrektur von der Robotersteuerung durchgeführt wird.

Da bei dem erfindungsgemäßen Verfahren die Erfassung der Zustandsgrößen mit dem Schweißprozeß 33 gekoppelt ist, werden die Zeitpunkte 46 oder die Zustände für die Meßwerterfassung der Meßsignale 45 bei veränderten Prozeßphasen 38 des Schweißprozesses 33 an diese angepaßt, wie dies in Fig. 5 ersichtlich ist, so daß immer in derselben Prozeßphase 38 gemessen wird. Dadurch können nie erhebliche Abweichungen zustande kommen und es kann somit eine sichere Positionsbestimmung des Schweißbrenners 10 gegenüber der Schweißfuge 27 durchgeführt werden. Wesentlich ist weiters, daß bei der Auswertung der Meßsignale 45 die Zustände des Schweißprozesses 33 berücksichtigt werden können, so daß entsprechende Korrekturen durchgeführt werden können, d.h., daß bei einer Messung in der Pulsphase 40 und bei einer Messung in der Pausenphase 41 diese beiden Meßsignale 45 aufeinander abgestimmt werden können, da die Steuervorrichtung 3 des Schweißgerätes 1 immer über die aktuellen Zustände bzw. Prozeßphasen 38 des Schweißprozesses 33 informiert ist bzw. Bescheid weiß. Dies kann beispielsweise insofern notwendig sein, da in der Pulsphase 40 immer ein höherer Wert anliegt, als in der Pausenphase 41 und somit entsprechend dem eingesetzten Auswertemodus eine Anpassung durchgeführt werden kann, wodurch ein entsprechendes Signal 32 für die Robotersteuerung geschaffen werden kann. Selbstverständlich ist es auch möglich, daß mehrere Meßsignale 45 unterschiedlicher Prozeßphasen 38 zu einem Signal 32 zusammengefaßt werden können.

Es kann also gesagt werden, daß die ermittelten bzw. generierten Meßsignale 45 während einer periodisch wiederkehrenden Prozeßphase 38, insbesondere einer Pulsperiode 42, zu einem Signal 32 von einer Auswertevorrichtung im Schweißgerät 1 oder der Steuervorrichtung 3 im Schweißgerät 1 verarbeitet werden, wobei es möglich ist, daß die Zeitpunkte 46 oder die Zustände für die Meßwerterfassung der Meßsignale 45 bei veränderten Prozeßphasen 38 des Schweißprozesses 33 an diese angepaßt werden. Die Signale 32 bzw. Istwerte für die Position entsprechen dabei den in Fig. 3 beschriebenen Signalen 32, so daß diese Signale 32 wiederum für die Positionsregelung herangezogen werden können und an eine externe Vorrichtung bzw. Anlage weitergeleitet werden können.

Selbstverständlich ist es möglich, daß die Erfassung der Zustandsgrößen auch direkt am Schweißbrenner 10 erfolgen kann, wobei die Übertragung der aufgenommen Meßsignale 45 vom Schweißbrenner 10 zum Schweißgerät 1, insbesondere zu der Steuervorrichtung 3, über einen Feldbus oder Steuerleitungen durchgeführt wird, so daß wiederum die Auswertung bzw. Bildung der Signale 32 vom Schweißgerät 1 bzw. von der Steuervorrichtung 3 des Schweißgerätes 1 durchgeführt werden kann und somit die Kopplung mit dem Schweißprozeß 33 wiederum möglich ist. Weiters ist es auch möglich, daß die Erfassung der Zustandsgrößen direkt am Schweißbrenner über Meßleitungen erfolgt. Es muß bei derartigen Meßmethoden jedoch sichergestellt werden, daß die aufgenommen Istwerte bzw. Meßsignale 45 mit dem Schweißprozeß 33 bzw, der Prozeßphase 38 gekoppelt bzw. in Verbindung gebracht werden können.

Selbstverständlich ist es möglich, daß das zuvor beschriebene Verfahren auch für andere Schweißverfahren eingesetzt werden kann. Hierzu ist es beispielsweise möglich, daß bei einem Kurzlichtbogenschweißverfahren die Meßwerterfassung beim Kurzschlußschweißen zu festgelegten Zeitpunkten oder zu bestimmten Zuständen des Prozesses in Abhängigkeit der Kurzschlußfrequenz durchgeführt wird bzw. die Kurzschlußfrequenz einen Meßwert darstellt, wobei wiederum mehrere Meßsignale 45 ermittelt werden können, aus denen dann wiederum ein Signal 32 gebildet wird.

Wesentlich ist bei den einzelnen unterschiedlichen bekannten Schweißverfahren, daß die Meßwerterfassung wiederum an den Schweißprozeß 33 gekoppelt wird, so daß durch die Kopplung der Meßwerterfassung und/oder der Auswertung mit dem durchzuführenden Schweißprozeß 33 Änderungen des Schweißprozesses 33 berücksichtigt werden können. Dadurch ist es auch möglich, daß selbständige oder programmierte Änderungen des Schweißprozesses 33 auf Grund eines hinterlegten Schweißprogrammes möglich sind. Es ist dabei auch möglich, daß dadurch eine Erhöhung der Stromstärke durch eine Materialzunahme ab einem bestimmten Zeitpunkt bzw. einer bestimmten Markierung durchgeführt werden kann, wobei die Werte der Meßwerterfassung bzw. die Zeitpunkte 46 wiederum an die neuen Einstellungen bzw. Parameter angepaßt werden können.

Weiters ist es möglich, daß durch die Bildung der Signale 32 vom Schweißgerät 1 bzw. durch die Steuervorrichtung 4 des Schweißgerätes 1 die Auswertung der prozeßabhängigen Signale 32 bzw. Istwerte ebenfalls von der Steuervorrichtung 4 des Schweißgerätes 1 oder zumindest einer weiteren Steuervorrichtung im Schweißgerät 1 durchgeführt wird, worauf die Steuervorrichtung 4 zumindest einen oder mehrere Korrekturwert(e) für die Position des Schweißbrenners 10 an die mit dem Schweißgerät 1 verbundene Vorrichtung bzw. Anlage, insbesondere einen Schweißroboter oder eine Roboteranlage, übersendet, d.h., daß direkt von dem Schweißgerät 1 bzw. der Steuervorrichtung 4 die Daten für die räumliche Position des Schweißbrenners 10 übersendet werden, wodurch lediglich von der Roboteranlage diese Position angefahren werden muß. Damit kann eine Auswertung in der Roboteranlage entfallen, da die Positionsbestimmung ausschließlich vom Schweißgerät 1 aus erfolgt und somit der Soll/Ist-Vergleich im Schweißgerät 1 stattfindet.

Hierzu ist es vorteilhaft, daß ein bidirektionaler Datenaustausch zwischen dem Schweißgerät 1 und der Roboteranlage durchgeführt wird, da dadurch für den Bewegungsablauf des Schweißbrenners 10 durch das Schweißgerät 1 bzw. die Steuervorrichtung 4 entsprechende Richtungsangaben zur Verfügung gestellt werden können. Dazu ist es möglich, daß von der Roboteranlage ein Richtungssignal für die Bewegung des Schweißbrenners 10 an das Schweißgerät 1, insbesondere die Steuervorrichtung 4, übersendet wird. Am Prozeßstart werden dabei bevorzugt von der Roboteranlage die Sollwerte für die räumliche Position des Schweißbrenners 10 bzw. des Schweißkopfes an das Schweißgerät 1, insbesondere der Steuervorrichtung 4, übersendet, wodurch nach der Generierung der Signale 32 ein entsprechender Soll/Ist-Vergleich durchgeführt werden kann. Dadurch ist es möglich, daß die gesamte Auswertung über das Schweißgerät 1 durchgeführt wird und somit die Vorgabe der Bewegung des Roboterarms der Roboteranlage von dem Schweißgerät 1 vorgenommen wird.

Selbstverständlich ist es auch möglich, daß bei dem Verfahren zum Generieren eines Signals oder zum fortlaufenden Regeln bzw. Nachführen einer Position des Schweißbrenners 10 bzw. eines Schweißkopfes zu einer herzustellenden Schweißnaht an einem Werkstück 16, 28, 29 auch weitere Parameter des Schweißgerätes 1 und der Roboteranlage, wie beispielsweise die Drahtvorschubgeschwindigkeit, Schweißgeschwindigkeit usw. berücksichtigt werden kann.

Weiters ist es auch möglich, daß das zuvor beschriebene Verfahren von einer externen Steuervorrichtung durchgeführt werden kann. Dabei muß nur sichergestellt werden, daß die Steuervorrichtung mit dem Schweißprozeß 33 gekoppelt werden kann, so daß die Meßwerterfassung der Meßsignale 45 wiederum in Abhängigkeit einer Prozeßphase 38 des Schweißprozesses 33 durchgeführt werden kann. Die externe Steuervorrichtung kann dann anschließend die Bildung des Signals 32 aus den Meßsignalen 45 durchführen bzw. die komplette Auswertung für die Positionsbestimmung und Führung des Schweißbrenners 10 übernehmen.

Abschließend sei darauf hingewiesen, daß in dem zuvor beschriebenen Ausführungsbeispiel einzelne Teile bzw. Darstellungen unproportional vergrößert dargestellt wurden, um das Verständnis der erfindungsgemäßen Lösung zu verbessern. Des weiteren können auch einzelne Teile bzw. Darstellungen der zuvor beschriebenen Merkmalskombinationen der einzelnen Ausführungsbeispiele in Verbindung mit anderen Einzelmerkmalen aus anderen Ausführungsbeispielen, eigenständige, erfindungsgemäße Lösungen bilden.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Drahtführungsleitung
- 13: Schweißdraht
- 14: Vorratstrommel
- 15: Lichtbogen

- 16: Werkstück
- 17: Schweißleitung
- 18: Schweißleitung
- 19: Kühlkreislauf
- 20: Strömungswächter

- 21: Wasserbehälter
- 22: Ein- und/oder Ausgabevorrichtung
- 23: Schlauchpaket
- 24: Verbindungsvorrichtung
- 25: Zugentlastungsvorrichtung

- 26: Gehäuse
- 27: Schweißfuge
- 28: Werkstück
- 29: Werkstück
- 30: Pfeil

- 31: Linie
- 32: Signal
- 33: Schweißprozeß
- 34: Gesamtzeitdauer
- 35: Startimpuls

- 36: Grundstrom
- 37: Zeitdauer
- 38: Prozeßphase
- 39: Impuls
- 40: Pulsphase

- 41: Pausenphase
- 42: Pulsperiode
- 43: Zeitpunkt
- 44: Periodendauer
- 45: Meßsignal

- 46: Zeitpunkt
- 47: Erfassungszeitpunkt
- 48: Zeitdauer

## Patentansprüche

1. Verfahren zum fortlaufenden Regeln bzw. Nachführen einer Position eines Schweißbrenners (10) bzw. eines Schweißkopfes zu einer herzustellenden Schweißnaht an einem Werkstück (16), bei dem der von einem Werkstück (16) bzw. der Schweißnaht beabstandete Schweißbrenner (10) eine seine lineare Schweißbewegung überlagernde Pendelbewegung ausführt, während die sich zeitlich ändernden Zustandsgrößen, insbesondere ein ohmscher Widerstand oder ein Strom und/oder eine Spannung, erfasst werden, wobei für die Regelung bzw. Nachführung der Position des Schweißbrenners (10) aus den erfassten Istwerten bzw. Signalen die seitliche Abweichung des Schweißbrenners (10) in Bezug auf die Schweißnaht, insbesondere auf die Schweißnahtmitte, und/oder die Höhe des Schweißbrenners (10) über dem Werkstück (16) bzw. der Schweißnaht abgeleitet werden, **dadurch gekennzeichnet, dass** die Auswertung der prozesszustandsabhängigen Istwerte von der Steuervorrichtung (4) des Schweißgerätes (1) oder zumindest einer weiteren Steuervorrichtung im Schweißgerät (1) durchgeführt wird, worauf die Steuervorrichtung (4) zumindest einen oder mehrere Korrekturwert (e) für die Position des Schweißbrenners (10) an eine mit dem Schweißgerät (1) verbundene Vorrichtung bzw. Anlage, insbesondere einen Schweißroboter oder eine Roboteranlage, übersendet und eine Messwerterfassung beim Pulsschweißen_zu festgelegten Zeitpunkten (46), die sich proportional zu der Pulsperiodendauer (44) ändern durchgeführt wird, wobei während einer Pulsperiode (42) mehrere Messsignale (45) generiert werden.

2. Verfahren zur Generierung eines Signals (32) zum fortlaufenden Regeln bzw. Nachführen einer Position eines Schweißbrenners (10) bzw. eines Schweißkopfes zu einer herzustellenden Schweißnaht an einem Werkstück (16), bei dem der von einem Werkstück (16) bzw. der Schweißnaht beabstandete Schweißbrenner (10) eine seine lineare Schweißbewegung überlagernde Pendelbewegung ausführt, während die sich zeitlich ändernden Zustandsgrößen, insbesondere ein ohmscher Widerstand oder ein Strom und/oder eine Spannung, erfasst werden, wobei für die Regelung bzw. Nachführung der Position des Schweißbrenners (10) aus den erfassten Istwerten bzw. Signalen die seitliche Abweichung des Schweißbrenners (10) in Bezug auf die Schweißnaht, insbesondere auf die Schweißnahtmitte, und/oder die Höhe des Schweißbrenners (10) über dem Werkstück (16) bzw. der Schweißnaht abgeleitet werden, **dadurch gekennzeichnet, dass** in Abhängigkeit periodisch wiederkehrender Prozessphasen eines Schweißprozesses (33) die Messwerterfassung zumindest eines Messsignals (45), insbesondere die Erfassung der mindestens einen Zustandsgröße, zu festgelegten Zeitpunkten (46) die sich ,proportional zu der Pulsperiodendauer (44) ändern, durchgeführt wird und in einer Programmdatenbank Messsignalparameter definiert werden, die mit Schweißprozessparametern der Prozessphasen bzw. eines Schweißprozessreglers gekoppelt werden.

3. Verfahren nach Anspruch 1 oder 2, **dadurch gekennzeichnet, dass** die Erfassung der Messsignale (45), insbesondere der Zustandsgrößen, im Schweißgerät (1), insbesondere an den Ausgangsklemmen des Schweißgerätes (1), durchgeführt wird.

4. Verfahren nach einem oder mehreren der vorhergehenden Ansprüche, **dadurch gekennzeichnet, dass** die Messwerterfassung in einer Pulsphase (40) und/oder einer Grundstromphase und/oder einem anderen Prozesszustand, wie z. B. einer Kurzschlussdauer usw., oder der gesamte Periode (44) oder einer Kombination daraus, durchgeführt wird.

5. Verfahren nach einem der Ansprüche 1 bis 3, **dadurch gekennzeichnet, dass** die Messwerterfassung beim Kurzlichtbogenschweißen in Abhängigkeit der Kurzschlussfrequenz bzw. die Kurzschlussfrequenz einen Messwert darstellt.

6. Verfahren nach einem oder mehreren der vorhergehenden Ansprüche, **dadurch gekennzeichnet, dass** die Messsignale (45) der erfassten Zustandsgrößen im Schweißgerät (1) ein Lichtbogenlängenäquivalent und/oder ein Kontaktrohrlängenäquivalent zur Schweißnaht darstellen.

7. Verfahren nach einem oder mehreren der vorhergehenden Ansprüche, **dadurch gekennzeichnet, dass** die Erfassung der Zustandsgrößen direkt am Schweißbrenner (10) erfolgt, wobei die Übertragung der aufgenommen Messsignale (45) vom Schweißbrenner (10) zum Schweißgerät (1), insbesondere zu der Steuervorrichtung (4), über einen Feldbus oder Steuerleitungen durchgeführt wird.

8. Verfahren nach einem oder mehreren der vorhergehenden Ansprüche, **dadurch gekennzeichnet, dass** die Erfassung der Zustandsgrößen direkt am Schweißbrenner (10) über Messleitungen erfolgt.

9. Verfahren nach einem oder mehreren der vorhergehenden Ansprüche, **dadurch gekennzeichnet, dass** die Zeitpunkte (46) oder die Zustände für die Messwerterfassung der Messsignale (45) bei veränderten Prozessphasen des Schweißprozesses (33) an diese angepasst werden.

10. Verfahren nach einem oder mehreren der vorhergehenden Ansprüche, **dadurch gekennzeichnet, dass** vor dem Beginn des Schweißprozesses (33) ein Nullpunktabgleich durchgeführt wird, wobei die aufgenommenen bzw. erfassten Signale bzw. Istwerte als Referenzwerte bzw. Sollwerte gespeichert werden.

11. Verfahren nach einem oder mehreren der vorhergehenden Ansprüche, **dadurch gekennzeichnet, dass** die ermittelten bzw. generierten Messsignale (45) während periodisch wiederkehrenden Prozessphasen, insbesondere einer Pulsperiode (42), zu einem Signal bzw. einem istwert von einer Auswertevorrichtung im Schweißgerät (1) oder der Steuervorrichtung (4) im Schweißgerät (1) verarbeitet werden.

12. Verfahren nach einem oder mehreren der vorhergehenden Ansprüche, **dadurch gekennzeichnet, dass** das aus den Zustandsgrößen berechnete lichtbogenlängenäquivalente und/oder kontaktrohrlängenäquivalente Signal an eine externe Vorrichtung bzw. Anlage weitergeleitet wird.

13. Verfahren nach einem der Ansprüche 2 bis 12, **dadurch gekennzeichnet, dass** die in der Programmdatenbank definierten Messsignalparameter, Anteile der einzelnen Messsignale (45) für die Berechnung des Signals, insbesondere des lichtbogenlängenäquivalenten und/oder kontaktrohrlängenäquivalenten Signals, definieren.

14. Verfahren nach einem der Ansprüche 2 bis 13, **dadurch gekennzeichnet, dass** die Programmdatenbank durch eine Parameterstruktur einer Fuzzy-Logik gebildet wird.

15. Verfahren nach einem oder mehreren der vorhergehenden Ansprüche, **dadurch gekennzeichnet, dass** von der Roboteranlage ein Richtungssignal für die Bewegung des Schweißbrenners (10) an das Schweißgerät (1), insbesondere der Steuervorrichtung (4), übersendet wird.

16. Verfahren nach einem oder mehreren der vorhergehenden Ansprüche, **dadurch gekennzeichnet, dass** von der Roboteranlage die Sollwerte für die räumliche Position des Schweißbrenners (10) bzw. des Schweißkopfes an das Schweißgerät (1), insbesondere die Steuervorrichtung (4), übersendet werden.

17. Verfahren nach einem oder mehreren der vorhergehenden Ansprüche, **dadurch gekennzeichnet, dass** die Vorgabe der Bewegung des Roboterarms der Roboteranlage von dem Schweißgerät (1) vorgenommen wird.

## Claims

1. Method of continuously controlling and tracking a position of a welding torch and a welding head relative to a weld seam to be produced on a workpiece, whereby the welding torch, spaced at a distance apart from a workpiece and the weld seam, effects a pendulum motion which is superimposed on its linear welding motion, during which state variables, in particular an ohmic resistance or a current and/or a voltage, are detected as they vary in time, the lateral deviation of the welding torch from the weld seam, in particular from the welding line centre, and/or the height of the welding torch above the workpiece and weld seam being derived from the detected actual values and signals in order to control and track the position of the welding torch, **characterised in that** the process-dependent actual values are evaluated by the control system of the welding device or at least one other control system in the welding device, whereupon the control system transmits at least one or more correction value(s) relating to the position of the welding torch to a device or system connected to the welding device, in particular a welding robot or a robot system, and a measurement value is detected during pulse welding at fixed points in time which change proportionally according to the duration of the pulse period, several measurement signals being generated during a pulse period.

2. Method of generating a signal for continuously controlling and tracking a position of a welding torch and welding head relative to a weld seam to be produced on a workpiece, whereby the welding torch, spaced at a distance apart from a workpiece and the weld seam, effects a pendulum motion which is superimposed on its linear welding motion, during which state variables, in particular an ohmic resistance or a current and/or a voltage, are detected as they vary in time, the lateral deviation of the welding torch from the weld seam, in particular from the welding line centre, and/or the height of the welding torch above the workpiece and the weld seam being derived from the detected actual values and signals in order to control and track the position of the welding torch, **characterised in that**, depending on periodically recurring process phases of a welding process, the measurement value detection routine for at least one measurement signal, in particular to detect the at least one state variable, is run at fixed points in time which change proportionally according to the duration of the pulse period and measurement signal parameters are defined in a programme data bank, which are correlated with welding process parameters of the process phases and a welding process controller.

3. Method as claimed in claim 1 or 2, **characterised in that** the measurement signals, in particular the state variables, are detected in the welding device, in particular at the output terminals of the welding device.

4. Method as claimed in one or more of the preceding claims, **characterised in that**, the measurement value detection routine is run during a pulse phase and/or a basic current phase and/or another process state, such as during a short circuit, etc., or the entire period or a combination thereof.

5. Method as claimed in one or more of claims 1 to 3, **characterised in that** the measurement value detection routine during short arc welding is run depending on the short circuit frequency and the short circuit frequency constitutes a measurement value.

6. Method as claimed in one or more of the preceding claims, **characterised in that** the measurement signals of the detected state variables represent an arc length equivalent and/or a contact pipe length equivalent to the weld seam.

7. Method as claimed in one or more of the preceding claims, **characterised in that** the state variables are detected directly at the welding torch and the sensed measurement signals are transmitted from the welding torch to the welding device, in particular the control system, via a field bus or control lines.

8. Method as claimed in one or more of the preceding claims, **characterised in that** the state variables are detected directly at the welding torch via measuring lines.

9. Method as claimed in one or more of the preceding claims, **characterised in that** the instants or the states for the measurement value detection routine for the measurement signals are adapted to new process phases of the welding process whenever the latter are changed.

10. Method as claimed in one or more of the preceding claims, **characterised in that** a zero calibration is run before the start of the welding process and the sensed or detected signals and actual values are stored as reference values or desired values.

11. Method as claimed in one or more of the preceding claims, **characterised in that** the measurement signals produced or generated during periodically recurring process phases, in particular a pulse period, are processed to generate a signal or an actual value by an evaluating device in the welding device or the control system in the welding device.

12. Method as claimed in one or more of the preceding claims, **characterised in that** an arc length equivalent and/or contact pipe length equivalent signal computed from the state variables is forwarded to an external device or system.

13. Method as claimed in one or more of the preceding claims, **characterised in that** the measurement signal parameters defined in a programme data bank define proportions of the individual measurement signals for computing the signal, in particular the arc length equivalent and/or contact pipe length equivalent signal.

14. Method as claimed in one or more of the preceding claims, **characterised in that** the programme data bank is based on a fuzzy logic parameter structure.

15. Method as claimed in one or more of the preceding claims, **characterised in that** a direction signal for the displacement of the welding torch is transmitted from the robot system to the welding device, in particular the control system.

16. Method as claimed in one or more of the preceding claims, **characterised in that** the desired values for the spatial position of the welding torch and welding head are transmitted by the robot system to the welding device, in particular the control system.

17. Method as claimed in one or more of the preceding claims, **characterised in that** the welding device assumes the role of fixing the settings for the displacement of the robot arm of the robot system.

## Revendications

1. Procédé de régulation ou de poursuite en continu d'une position d'un chalumeau de soudage respectivement d'une tête de soudage d'une soudure à réaliser à une pièce, où le chalumeau de soudage espacé d'une pièce respectivement de la soudure exécute un mouvement pendulaire superposé à son mouvement de soudage linéaire, pendant que les grandeurs d'état qui se modifient dans le temps, en particulier une résistance ohmique ou un courant et/ou une tension sont détectées, où pour la régulation respectivement la poursuite de la position du chalumeau à partir des valeurs réelles respectivement signaux détectés, l'écart latéral du chalumeau par rapport à la soudure, en particulier au milieu de la soudure et/ou la hauteur du chalumeau au-dessus de la pièce respectivement la soudure sont dérivés, **caractérisé en ce que** l'évaluation des valeurs réelles dépendant de l'état du processus est effectuée par le dispositif de commande de l'appareil à souder ou au moins un autre dispositif de commande dans l'appareil à souder, à la suite de quoi le dispositif de commande transmet au moins une ou plusieurs valeurs de correction pour la position du chalumeau à un dispositif respectivement installation relié à l'appareil à souder, en particulier un robot de soudage ou une installation de robot, et une détection de valeur de mesure est exécutée lors du soudage par impulsion à des instants fixés qui variant en proportion d'une période d'impulsion, où pendant une période d'impulsion, plusieurs signaux de mesure sont générés.

2. Procédé pour la génération d'un signal pour une régulation respectivement poursuite en continu d'une position d'un chalumeau de soudage ou d'une tête de soudage à une soudure à réaliser à une pièce, où le chalumeau espacé d'une pièce respectivement de la soudure exécute un mouvement pendulaire superposé à son mouvement de soudage linéaire, pendant que les grandeurs d'état qui se modifient dans le temps, en particulier une résistance ohmique et un courant et/ou une tension sont détectées, où pour la régulation respectivement poursuite de la position du chalumeau à partir des valeurs réelles respectivement signaux détectés, l'écart latéral du chalumeau par rapport à la soudure, en particulier au milieu de la soudure, et/ou la hauteur du chalumeau au-dessus de la pièce respectivement de la soudure sont dérivés, **caractérisé en ce qu'**en fonction de phases de processus répétées périodiquement d'un processus de soudage, la détection de valeurs de mesure d'au moins un signal de mesure, en particulier la détection d'au moins une grandeur d'état est effectuée à des instants fixés qui variant en proportion d'une période d'impulsion, et dans une banque de données de programmes, des paramètres de signaux de mesure sont définis qui sont couplés avec des paramètres de processus de soudage des phases de processus respectivement d'un régulateur de processus de soudage.

3. Procédé selon la revendication 1 ou 2, **caractérisé en ce que** la détection des signaux de mesure, en particulier des grandeurs d'état est effectuée dans l'appareil à souder, en particulier aux bornes de sortie de l'appareil à souder.

4. Procédé selon l'une ou plusieurs des revendications précédentes, **caractérisé en ce que** la détection des valeurs de mesure est effectuée dans une phase d'impulsion et/ou une phase de courant de base et/ou un autre état de processus, comme par exemple une durée de court-circuit etc. ou de la période totale ou d'une combinaison de ceux-ci.

5. Procédé selon l'une ou plusieurs des revendications 1 à 3, **caractérisé en ce que** la détection des valeurs de mesure lors du soudage à l'arc court, en fonction de la fréquence du court-circuit respectivement la fréquence de court-circuit représente une valeur de mesure.

6. Procédé selon l'une ou plusieurs des revendications précédentes, **caractérisé en ce que** les signaux de mesure des grandeurs d'état détectés dans l'appareil à souder représentent un équivalent de longueur d'arc et/ou un équivalent de longueur de tube de contact à la soudure.

7. Procédé selon l'une ou plusieurs des revendications précédentes, **caractérisé en ce que** la détection des grandeurs d'état a lieu directement au chalumeau, où la transmission des signaux de mesure reçus du chalumeau à l'appareil à souder, en particulier au dispositif de commande, a lieu par un bus de champ ou par des lignes de commande.

8. Procédé selon l'une ou plusieurs des revendications précédentes, **caractérisé en ce que** la détection des grandeurs d'état a lieu directement au chalumeau par des lignes de mesure.

9. Procédé selon l'une ou plusieurs des revendications précédentes, **caractérisé en ce que** les instants ou les états pour la détection des valeurs de mesure des signaux de mesure, dans le cas de phases de processus modifiées du processus de soudage, sont adaptés à celles-ci.

10. Procédé selon l'une ou plusieurs des revendications précédentes, **caractérisé en ce qu'**avant le début du processus de soudage, une compensation à zéro est effectuée, où les signaux respectivement valeurs réelles reçus ou détectés sont stockés comme valeurs de référence respectivement valeurs de consigne.

11. Procédé selon l'une ou plusieurs des revendications précédentes, **caractérisé en ce que** les signaux de mesure déterminés respectivement générés pendant des phases de processus répétées périodiquement, en particulier une période d'impulsions, sont traités en un signal respectivement une valeur réelle par un dispositif d'évaluation dans l'appareil à souder ou le dispositif de commande dans l'appareil à souder.

12. Procédé selon l'une ou plusieurs des revendications précédentes, **caractérisé en ce que** le signal calculé à partir des grandeurs d'état, équivalent à la longueur de l'arc et/ou équivalent à la longueur du tube de contact est transmis à un dispositif respectivement installation externe.

13. Procédé selon l'une ou plusieurs des revendications précédentes, **caractérisé en ce que** les paramètres de signaux de mesure définis dans la banque de données de programmes définissent des signaux de mesure individuels pour le calcul du signal, en particulier du signal équivalent à la longueur d'arc et/ou équivalent à la longueur du tube de contact.

14. Procédé selon l'une ou plusieurs des revendications précédentes, **caractérisé en ce que** la banque de données de programmes est formée par une structure de paramètres d'une logique floue.

15. Procédé selon l'une ou plusieurs des revendications précédentes, **caractérisé en ce que** l'installation de robot transmet un signal de direction pour le déplacement du chalumeau à l'appareil à souder, en particulier au dispositif de commande.

16. Procédé selon l'une ou plusieurs des revendications précédentes, **caractérisé en ce que** l'installation de robot transmet les valeurs de consigne pour la position spatiale du chalumeau respectivement de la tête à souder à l'appareil à souder, en particulier au dispositif de commande.

17. Procédé selon l'une ou plusieurs des revendications précédentes, **caractérisé en ce que** la consigne du déplacement du bras de robot de l'installation de robot est effectuée par l'appareil à souder.
